Europäisches Patentamt

European Patent Office

Office européen des brevets

(11) Veröffentlichungsnummer: **0 326 942**
**A2**

(12) **EUROPÄISCHE PATENTANMELDUNG**

(21) Anmeldenummer: 89101344.3

(22) Anmeldetag: 26.01.89

(51) Int. Cl.⁴: **G08B 13/18 , G01J 5/08**

(30) Priorität: 04.02.88 DE 3803278

(43) Veröffentlichungstag der Anmeldung:
09.08.89 Patentblatt 89/32

(84) Benannte Vertragsstaaten:
AT BE CH DE ES FR GB GR IT LI NL SE

(71) Anmelder: Brück, Friedrich
Luisenstrasse 3
D-5253 Lindlar(DE)

(72) Erfinder: Brück, Friedrich
Luisenstrasse 3
D-5253 Lindlar(DE)

(74) Vertreter: Hennicke, Albrecht, Dipl.-Ing. et al
Patentanwälte Dipl.-Ing. Buschhoff Dipl.-Ing.
Hennicke Dipl.-Ing. Vollbach
Kaiser-Wilhelm-Ring 24 Postfach 190 408
D-5000 Köln 1(DE)

(54) Infrarot-Sensor.

(57) Infrarot-Signalgeber, insbesondere für Bewegungsmelder, dessen Infrarot-Strahlungsempfänger (14) mindestens zwei Empfangsflächen (23, 24) aufweist, die einen Winkel ($\alpha$) miteinander einschließen, der größer als 180° ist, um den Raum zu vergrößern, der mit einem einzigen Signalgeber überwacht werden kann.

FIG.2

EP 0 326 942 A2

## Infrarot-Signalgeber

Die Erfindung betrifft einen Infrarot-Signalgeber, insbesondere für Bewegungsmelder, mit einem Infrarot-Strahlungsempfänger.

Bewegungsmelder werden zur Überwachung von Räumen eingesetzt, um die Anwesenheit von Menschen oder Tieren festzustellen, die Wärme in Form von Infrarotstrahlen aussenden. Die Bewegungsmelder haben einen Signalgeber, der Schaltsignale zum Einschalten einer Lichtquelle, einer Warnanlage od.dgl. aussendet, die durch Temperaturänderungen in einem Infrarot-Strahlungsempfänger erzeugt werden, welcher die Infrarotstrahlen aufnimmt.

Die Infrarot-Strahlungsempfänger der bekannten Infrarot-Signalgeber haben eine ebene Empfangsfläche, die der zu überwachenden Wärmequelle zugewandt ist und einen Winkelbereich von etwa 120° erfaßt. Wärmestrahlen, die unter einem flacheren Winkel als 30° auf die Empfangsfläche auftreffen, werden von dem Infrarotstrahlungsempfänger nicht mehr registriert, so daß es in Räumen in der Nähe der Wände, an denen die Bewegungsmelder montiert sind, tote Winkel gibt, in denen keine Überwachung stattfindet.

Aufgabe der Erfindung ist es, diesen Nachteil zu vermeiden und einen Infrarot-Signalgeber, insbesondere für Bewegungsmelder, mit einem sehr großen Aktionsradius zu schaffen.

Diese Aufgabe wird mit der Erfindung dadurch gelöst, daß der Infrarot-Strahlungsempfänger mindestens zwei Empfangsflächen aufweist, die einen Winkel miteinander einschließen, der größer als 180° ist.

Diese Ausgestaltung hat den Vorteil, daß ein Bewegungsmelder den Raum, an dessen Wand er angebracht ist, vollständig überwachen kann, ohne daß tote Winkel verbleiben. Bei geeigneter Ausbildung des Signalgebergehäuses und bei Anordnung von mehreren Empfangsflächen ist sogar eine Rundumsicht möglich.

Zur vollständigen Überwachung eines Raumes genügt ein einziger Infrarot-Signalgeber, wenn die Empfangsflächen seines Strahlungsempfängers unter einem so großen Winkel zueinander angeordnet sind, daß der Erfassungsbereich des Infrarot-Strahlungsempfängers mindestens 180° beträgt. Der Bewegungsmelder kann dann in einfacher Weise neben oder anstelle eines Lichtschalters an einer Wand unmittelbar neben einer Eingangstür angebracht werden, wo er Personen sofort erfaßt, die den Raum durch die Tür betreten. Da der Strahlungsempfänger mit derart angeordneten Empfangsflächen auch solche Infrarotstrahlen aufnimmt, die unmittelbar neben und parallel zu der Fläche ausgesandt werden, an der der Infrarot-Signalgeber angeordnet ist, ist es möglich, alle Raumöffnungen, wie Fenster, Türen, Durchgänge od.dgl., zu überwachen, ohne daß das Überwachungsgerät selbst von außerhalb der Raumöffnung aus sichtbar ist, weil es auf der Innenseite derjenigen Wand angeordnet sein kann, in der sich die Raumöffnung befindet.

Besonders zweckmäßig ist es, wenn die Empfangsflächen des Strahlungsempfängers auf den Innenseiten einer V-förmig ausgebildeten Infrarot-Filterscheibe angeordnet sind, die in einem Gehäuse für den Infrarot-Strahlungsempfänger angeordnet ist. Dies ergibt eine einfache und kompakte Bauweise. Es ist aber auch möglich, daß der Infrarot-Strahlungsempfänger aus mindestens zwei handelsüblichen Infrarot-Detektoren besteht, die unter einem Winkel > 180° an einem gemeinsamen Träger befestigt sind. Beide Infrarot-Detektoren sind dann an den Signalgeber angeschlossen und überlappen einander mit ihren Erfassungsbereichen, wobei ihre Winkelstellung zueinander nach dem gewünschten Erfassungswinkel gewählt ist. Bei einer solchen Ausführungsform ist es zweckmäßig, die Infrarot-Detektoren im Abstand voneinander anzuordnen. Soll beispielsweise ein Erfassungswinkel von 180° in einer horizontalen Ebene erreicht werden, werden die beiden Infrarot-Detektoren untereinander angeordnet, wobei der eine von ihnen so weit nach links und der andere so weit nach rechts gedreht ist, daß die Erfassungsbereiche der Detektoren jeweils an der Wand beginnen, an der der Signalgeber befestigt ist.

Um den Signalgeber universell verwenden zu können, ist es zweckmäßig, im Abstand vor den Empfangsflächen des Infrarot-Strahlungsempfängers eine Abdeckplatte anzuordnen, die mehrere, über den gesamten Erfassungsbereich verteilte Eintrittsöffnungen für die Infrarotstrahlen aufweist. Diese Eintrittsöffnungen können Linsen, Schlitze oder Löcher sein, die jeweils nur einen verhältnismäßig kleinen Winkelbereich erfassen. Eine am Signalgeber vorüberwandernde Wärmequelle beeinflußt hierdurch immer wieder von neuem den Sensor, so daß dessen Schaltstellung aufrechterhalten bleibt, solange sich die Wärmequelle bewegt.

Um den Signalgeber nach der Erfindung in übliche elektrische Installationssysteme einfach integrieren zu können, ist es zweckmäßig, wenn die Infrarot-Detektoren, ihre Träger und ihre Abdeckplatte in einem alles umschließenden Gehäuse angeordnet sind, welches in eine Unterputzdose für elektrische Installationsleitungen paßt.

Weitere Merkmale und Vorteile der Erfindung ergeben sich aus der nachfolgenden Beschreibung und der Zeichnung, in der bevorzugte Ausführungsformen der Erfindung an Beispielen näher erläutert sind. Es zeigt:

Fig. 1 einen Signalgeber nach der Erfindung als Einsatzteil für eine Unterputzdose in einer perspektivischen Darstellung,

Fig. 2 den Gegenstand der Fig. 1 in einer etwas abgewandelten Ausführungsform in einem Horizontalschnitt nach Linie II-II,

Fig. 3 den Gegenstand der Fig. 1 bei abgenommener Abdeckplatte in einer Vorderansicht und

Fig. 4 den Gegenstand der Fig. 3 in einem Horizontalschnitt nach Linie III-III.

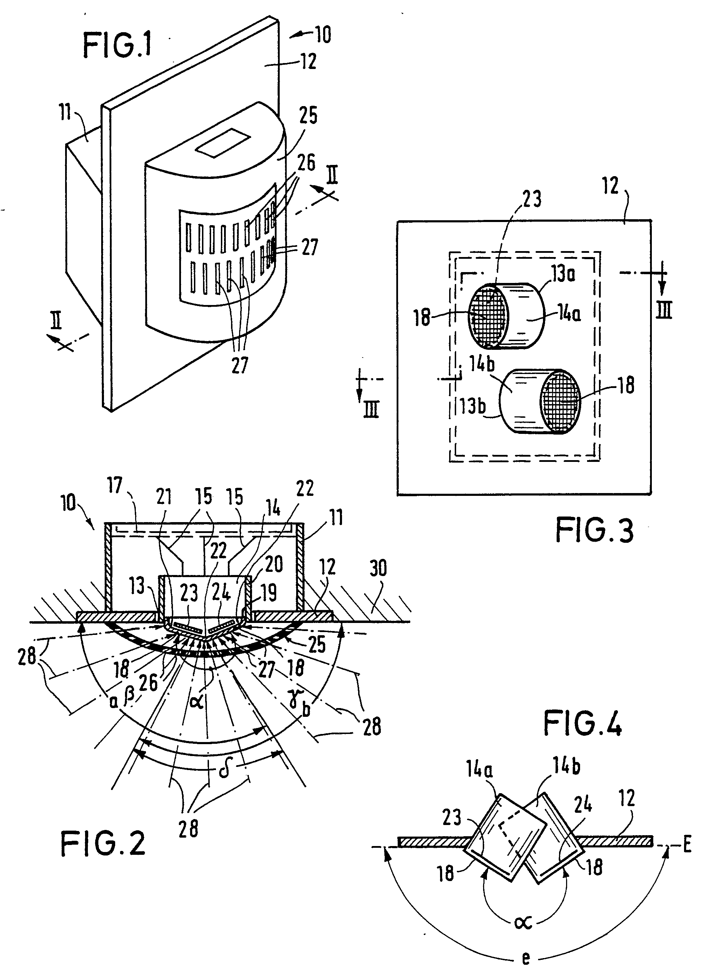

In den Zeichnungen ist mit 10 ein Infrarot-Signalgeber bezeichnet, der ein Gehäuse 11 aufweist, das in eine normale Unterputzdose für Schalter, Steckdosen od.dgl. eines elektrischen Installationssystems paßt. An der Vorderseite des Gehäuses 11 befindet sich eine Trägerplatte 12, die bei dem in Fig. 2 dargestellten Ausführungsbeispiel eine kreisrunde Öffnung 13 in der Mitte und bei dem Ausführungsbeispiel nach Fig. 3 zwei kreisrunde Ausnehmungen 13a und 13b aufweist.

In der Ausnehmung 13 der Trägerplatte 12 ist ein Infrarot-Strahlungsempfänger 14 befestigt, dessen Anschlußfahnen 15 in hier nicht näher dargestellter Weise mit einer nur angedeuteten Schalteinrichtung 17 verbunden sind und die an ihrer Außenseite eine Infrarot-Filterscheibe 18 trägt. Diese Infrarot-Filterscheibe 18 wird vom vorderen Rand 19 des Strahlungsempfängergehäuses 20 gehalten und ist V-förmig ausgebildet, wie dies aus Fig. 2 hervorgeht. Auf der Innenseite 21 und 22 der Infrarot-Filterscheibe 18 befinden sich die Empfangsflächen 23 und 24 des Infrarot-Strahlungsempfängers 14, die hierdurch unter einem Winkel $\alpha$ angeordnet sind, der größer als 180° ist. Jede der beiden Empfangsflächen 23 und 24 hat einen Erfassungswinkel $\beta$ bzw. $\gamma$ von etwa 120°. Durch die V-förmige Anordnung der Empfangsflächen 23 und 24 hinter der ebenfalls V-förmig ausgebildeten Infrarot-Filterscheibe 18 beginnt der durch den Winkel $\beta$ gekennzeichnete Erfassungsbereich a der Empfangsfläche 23 an der Tragplatte 12 links der Öffnung 13 und der durch den Winkel $\gamma$ gekennzeichnete Erfassungsbereich b der Empfangsfläche 24 an der Tragplatte 12 rechts der Öffnung 13, während die Erfassungsbereiche a und b beider Empfangsflächen 23 und 24 in der Mitte in einem durch den Winkel $\delta$ bezeichneten Bereich einander überlappen.

An der Vorderseite der Trägerplatte 12 ist im Abstand vor der Filterscheibe 18 und den hinter dieser angeordneten Empfangsflächen 23 und 24 eine Abdeckplatte 25 aus opakem Kunststoff befestigt, die mehrere, über den gesamten Erfassungsbereich a und b verteilte Eintrittsöffnungen 26 und 27 in Form von länglichen Schlitzen aufweist, durch die die Infrarotstrahlen 28 eintreten können, die in Fig. 2 durch strichpunktierte Linien angedeutet sind. Man erkennt, daß auch Infrarotstrahlen 28, die parallel und unmittelbar neben der Wand 30 verlaufen, in die der Signalgeber 10 eingelassen ist, durch die Eintrittsöffnungen 26 bzw. 27 der Abdeckplatte 25 hindurch auf die unter einem Winkel zur Trägerplatte 12 und zur Wand 30 angeordneten Empfangsflächen 23 und 24 des Infrarot-Strahlungsempfängers auftreffen und von diesen erfaßt werden, so daß sie ein Signal erzeugen können. Der gesamte Erfassungsbereich des Infrarot-Strahlungsempfängers 14 erstreckt sich also über insgesamt 180° und erfaßt so den gesamten vor der Wand 30 liegenden Raum.

Bei dem in den Fig. 3 und 4 dargestellten Ausführungsbeispiel gehören zu dem Infrarot-Strahlungsempfänger 14 zwei Infrarot-Detektoren 14a und 14b, die in den Ausnehmungen 13a und 13b der Trägerplatte 12 im axialen Abstand übereinander angeordnet sind. Hierbei ist die Anordnung so getroffen, daß die ebene Empfangsfläche 23 des oberen Infrarot-Detektors 14a in den Fig. 3 und 4 nach links und die ebene Empfangsfläche 24 des unteren Infrarot-Detektors 14b in den Fig. 3 und 4 nach rechts gerichtet ist. Vor beiden Empfangsflächen ist jeweils eine ebene Infrarot-Filterscheibe 18 angeordnet und man erkennt aus Fig. 4, daß die beiden Empfangsflächen 23 und 24 der Infrarot-Detektoren 14a und 14b einen Winkel $\alpha$ miteinander einschließen, der größer als 180° ist. Der gesamte Erfassungsbereich e beider Infrarot-Detektoren 14a und 14b erstreckt sich deshalb über den gesamten Raum, der vor der durch die Vorderseite der Trägerplatte 12 definierten Ebene E liegt.

Während für die Ausführungsform nach Fig. 2 in der Abdeckplatte 25 nur eine Lochreihe angeordnet werden muß, die sich über den gesamten Erfassungbereich a + b erstreckt, ist es notwendig, bei der Ausführungsform nach Fig. 3 und 4 getrennte Lochreihen 26 und 27 für die übereinander angeordneten Infrarot-Detektoren 14a und 14b in der Abdeckplatte 25 vorzusehen oder Eintrittsschlitze anzuordnen, die so lang sind, daß sie beide Infrarot-Detektoren überdecken.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Insbesondere ist es möglich, mehr als zwei Empfangsflächen vorzusehen, die polygonartig aneinander anschließend angeordnet sind und von einer mit Eintrittsöffnungen versehenen Abdeckplatte auf einem Erfassungsbereich umschlossen werden, der größer als 180° ist und bis zu 360° betragen kann. Die Empfangsflächen können dann auch gegen die Horizontale geneigt sein, so daß der Signalgeber, an erhöhter Stelle angebracht, den gesamten unter ihm liegenden Raum überwachen kann.

## Ansprüche

1. Infrarot-Signalgeber, insbesondere für Bewegungsmelder, mit einem Infrarot-Strahlungsempfänger, **dadurch gekennzeichnet,** daß der Infrarot-Strahlungsempfänger (14) mindestens zwei Empfangsflächen (23, 24) aufweist, die einen Winkel (α) miteinander einschließen, der größer als 180° ist.

2. Signalgeber nach Anspruch 1, **dadurch gekennzeichnet,** daß die Empfangsflächen (23, 24) unter einem so großen Winkel (c) zueinander angeordnet sind, daß der Erfassungsbereich (e) des Infrarot-Strahlungsempfängers (14) mindestens 180° beträgt.

3. Signalgeber nach Anspruch 1 oder 2, **dadurch gekennzeichnet,** daß die Empfangsflächen (23, 24) auf den Innenseiten (21, 22) einer V-förmig ausgebildeten Infrarot-Filterscheibe (18) angeordnet sind, die in einem Gehäuse (20) für den Infrarot-Strahlungsempfänger (14) angeordnet ist.

4. Signalgeber nach Anspruch 1 oder 2, **dadurch gekennzeichnet,** daß der Infrarot-Strahlungsempfänger aus mindestens zwei Infrarot-Detektoren (14a, 14b) besteht, die unter einem Winkel > 180° an einem gemeinsamen Träger (12) befestigt sind.

5. Signalgeber nach einem der Ansprüche 1 bis 4, **dadurch gekennzeichnet,** daß die Infrarot-Detektoren (14a, 14b) im Abstand voneinander angeordnet sind.

6. Signalgeber nach einem der Ansprüche 1 bis 5, **dadurch gekennzeichnet,** daß im Abstand vor den Empfangsflächen (23, 24) des Infrarot-Strahlungsempfängers (14) eine Abdeckplatte (25) angeordnet ist, die mehrere, über den gesamten Erfassungsbereich (e) verteilte Eintrittsöffnungen 26, 27) für die Infrarotstrahlen (28) aufweist.

7. Signalgeber nach einem der Ansprüche 1 bis 6, **dadurch gekennzeichnet,** daß die Infrarot-Detektoren (14a, 14b), ihr Träger (12) und ihre Abdeckplatte (25) in einem alles umschließenden Gehäuse (11) angeordnet sind, welches in eine Unterputzdose für elektrische Installationsleitungen paßt.

FIG.1

FIG.3

FIG.2

FIG.4